# EUROPÄISCHE PATENTSCHRIFT

(11) **EP 3 562 089 B1**
(45) Veröffentlichungstag und Bekanntmachung des Hinweises auf die Patenterteilung: **30.10.2024**
(21) Anmeldenummer: 18168766.6
(22) Anmeldetag: 23.04.2018
(51) Int. Cl.: H04L 9/32

(54) **AUTOMATISIERTES ZERTIFIKATSMANAGEMENT**
AUTOMATED CERTIFICATE MANAGEMENT
GESTION AUTOMATISÉE DES CERTIFICATS

(43) Veröffentlichungstag der Anmeldung: 30.10.2019
(73) Patentinhaber: Siemens Aktiengesellschaft, 80333 München (DE)
(72) Erfinder: Lutz, Benjamin, 76327 Pfinztal (DE); Palmin, Anna, 76187 Karlsruhe (DE)
(74) Vertreter: Siemens Patent Attorneys

(56) Entgegenhaltungen:
- US-A1- 2010 042 232
- US-A1- 2015 113 267
- DONALD EASTLAKE 3RD MOTOROLA LABORATORIES: "Transport Layer Security (TLS) Extensions: Extension Definitions; draft-ietf-tls-rfc4366-bis-01.txt", TRANSPORT LAYER SECURITY (TLS) EXTENSIONS: EXTENSION DEFINITIONS; DRAFT-IETF-TLS-RFC4366-BIS-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. tls, no. 1, 14 January 2008 (2008-01-14), XP015054012

## Beschreibung

Die Erfindung betrifft ein Verfahren zur initialen Vergabe und/oder Erneuerung von Zertifikaten für Geräte und/oder Applikationen in einem Leitsystem für eine technische Anlage auf Basis von Zertifikaten, wobei die Geräte und/oder Applikationen in einem Rahmen der initialen Vergabe und/oder Erneuerung der Zertifikate ein Zertifikatsmanagementprotokoll zur Stellung eines Zertifikatsantrags bei wenigstens einer Zertifizierungsstelle der technischen Anlage verwenden, mit den Merkmalen des Anspruchs 1. Außerdem betrifft die Erfindung einen Zertifizierungsservice für ein Leitsystem einer technischen Anlage gemäß Anspruch 6 und ein Leitsystem für eine technische Anlage gemäß Anspruch 7 sowie dessen Verwendung in einer technischen Anlage gemäß Anspruch 8.

Im Kontext einer technischen Anlage kommen zur Laufzeit sogenannte operative Zertifikate zum Einsatz. Durch die Verwendung der operativen Zertifikate kann eine Authentifikation und eine Kommunikationsintegrität von Kommunikationsteilnehmern in einem Leitsystem der technischen, technischen Anlage durch kryptographische Mittel erreicht werden.

Ein in einem Gerät sicher hinterlegter, privater Schlüssel wird dabei an einen zugehörigen öffentlichen Schlüssel gebunden. Dabei erlangt eine automatisierte Unterstützung der Abläufe für eine Verwaltung der operativen Zertifikate und den dazugehörigen kryptographischen Schlüsseln im Kontext einer Public Key Infrastruktur (PKI), insbesondere als Basis für eine sichere Kommunikation zwischen Applikationen und Geräten innerhalb der technischen Anlage, zunehmend eine höhere Bedeutung.

Durch eine Reduktion von manuellen Aktionen im Rahmen der Zertifikatsverwaltung und durch zunehmend automatisierte Abläufe auf Basis von Standardprotokollen, insbesondere zum Ausrollen und Erneuern von Zertifikaten, können eine Flexibilität und Interoperabilität im Kontext der technischen Anlage erhöht werden.

Üblicherweise wird die automatisierte Verwaltung von operativen Zertifikaten im Anlagenkontext unter Verwendung eines Standardprotokolls, beispielsweise des Certificate Management Protokolls (CMP), realisiert. Dabei fordern die Geräte und Applikationen die erforderlichen operativen Zertifikate situationsbedingt von einem lokalen Registrierungsdienst, einer sogenannten Local Registration Authority (LRA), an. Dies erfolgt beispielsweise im Fall einer Erneuerung, die aufgrund eines Ablaufs oder eines Widerrufs des Zertifikats notwendig ist.

Dabei senden die Geräte und Applikationen eine Anfrage an den lokalen Registrierungsdienst, den sogenannten Certificate Signing Request (CSR). Der lokale Registrierungsdienst prüft die Anforderung, indem er zuerst eine Signatur, mit der die Anforderung signiert ist, auf Gültigkeit überprüft. Anschließend prüft er, ob ein Gerätezertifikat, eine Seriennummer und ggf. weitere Identifikationsmerkmale der Geräte bzw. der Applikationen in einem Software-Inventar des Leitsystems der technischen Anlage, dem sogenannten Inventory, hinterlegt ist. Im Falle einer erfolgreichen Prüfung wird die Anforderung an die sogenannte Certification Authority (CA) weitergeleitet, die ein operatives Zertifikat für das Gerät bzw. die Applikation ausstellt.

Stellt eine Anlagenkomponente oder der lokale Registrierungsdienst (LRA) als Stellvertreter der Anlagenkomponente fest, dass eines der für die Komponente ausgestellten Zertifikate in Kürze abläuft, soll die Erneuerung des Zertifikats möglichst kurzfristig durchgeführt werden. Ansonsten besteht die Gefahr, dass Kommunikationspartner der Komponente das abgelaufene Zertifikat als ungültig ablehnen und als Konsequenz hieraus die Kommunikation mit der Komponente verweigern. In einer großen, verteilten, modular aufgebauten technischen Anlage kann jedoch nicht garantiert werden, dass der (lokale) Registrierungsdienst stets eine Online-Verbindung zu einer oder mehreren projektspezifischen Certification Authority (CA) und/oder zu den einzelnen Anlagenkomponenten, beispielsweise der Operator Station (OS), aufweist oder eine solche bei Bedarf zeitnah aufbauen kann.

Ein Standardablauf einer Zertifikatserneuerung gemäß dem Certificate Management Protokoll (CMP) sieht vor, dass verschiedene Meldungen, die zwischen an einem Zertifikatsmanagement beteiligten Instanzen (Endgeräte, Registrierungsdienste (RA), Zertifizierungsstellen (CA)) ausgetauscht werden, nach der Spezifikationspublikation RFC4210/4211 (RFC = Request For Comments) der Internet Engineering Task Force (IETF) aufgebaut sind. Beispielsweise besteht ein Zertifikatsantrag (engl. Certificate Request, kurz: CertReq), der von einem Endgerät oder einem Registrierungsdienst stellvertretend für das Endgerät generiert wird, in der Regel aus folgenden Inhalten:
- eine Request ID (ID = Identifier),
- ein sogenanntes Certificate Template, das diverse Felder, die später im Zertifikat aufgeführt werden sollen (beispielsweise eine Seriennummer des Endgerätes), beinhaltet,
- einen sogenannten Proof of Possession (kurz PoP), also einen Nachweise, dass das Endgerät auch einen Schlüssel für eine sichere Übertragung besitzt,
- einen sogenannten Proof-of-Origin, um eine Herkunft des Antrags nachvollziehen zu können.

Für den Fall, dass die Online-Verbindung zwischen den Anlagenkomponenten und dem (lokalen) Registrierungsdienst und/oder dem (lokalen) Registrierungsdienst und der zuständigen Zertifizierungsstelle bzw. mehreren zuständigen Zertifizierungsstellen häufig abgebrochen wird, kann der (lokale) Registrierungsdienst seine Koordinierungsaufgaben nicht zufriedenstellend ausführen.

In der Spezifikation RFC4210 wird als Gegenmaßnahme ein sogenanntes Polling zwischen den Anlagenkomponenten, (lokalem) Registrierungsdienst und der zuständigen Zertifizierungsstelle bzw. mehreren zuständigen Zertifizierungsstellen zum Überbrücken von Offline-Zuständen empfohlen: eine Instanz versucht die andere durch das Versenden von sogenannten Poll Requests so lange zu erreichen, bis diese antwortet. In der technischen Anlage wird dadurch jedoch einerseits unnötig der Kommunikationsaufwand erhöht und somit unter Umständen die Verfügbarkeit der einzelnen Komponenten und der Gesamtanlage gefährdet.

Darüber hinaus ist es mittels des spezifikationsgemäßen Pollings nicht möglich, eine Eskalation, d.h. eine hohe Priorisierung der fehlenden Online-Verbindung herbeizuführen. Insbesondere werden keine weiteren Instanzen/Benutzer über die fehlende Online-Verbindung informiert, so dass die für die Zertifikatserneuerung erforderliche Online-Verbindung (auch im dringenden Bedarfsfall) nicht sofort aufgebaut werden kann.

Technisch ist es mit einem hohen Aufwand und entsprechend hohen Investitionen möglich, durch adäquate Maßnahmen (beispielsweise eine redundante Auslegung von (lokalem) Registrierungsdienst/ Zertifizierungsstelle(n) und einer Umsetzung adäquater Load Balancing-Mechanismen eine hohe Verfügbarkeit der Instanzen sowie eine beständige Online-Verbindung zwischen diesen zu garantieren, damit ein Zertifikat im Bedarfsfall möglichst sofort bzw. schnell erneuert werden kann. Damit gehen jedoch enorme Mehrkosten einher, die nicht von allen Betreibern von Automatisierungsanlagen investiert werden können.

In der Veröffentlichung "EASTLAKE DONALD 3RD: "Transport Layer Security (TLS) Extensions: Extension Definitions - draft-ietf-tls-rfc4366-bis-01.txt", MOTOROLA LABORATORIES, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. tls, no. 1, XP015054012, chapter 1. "Introduction"; pp. 3-4, chapter 5. "Client Certificate URLs"; pp. 7-10 / 14.01.2008" ist ein Vorschlag für eine Standardisierung des "Transport Layer Security (TLS)"-Protokolls beschrieben. Hierin ist offenbart, dass ein Server eine Fehlermeldung "certificate_unobtainable" generiert, falls sich eine Verzögerung bei einer Zertifikatszustellung zu einem das Zertifikat abfragenden Client ergeben hat.

In der US 2010/042232 A1 ist ein Verfahren zum Betreiben einer Prozessanlage mittels eines Leitsystems offenbart.

Der Erfindung liegt die Aufgabe zugrunde, ein verbessertes Zertifikatsmanagement für ein Leitsystem einer technischen Anlage anzugeben, das eine automatisierte Vergabe von Zertifikaten in einem Bedarfsfall ereignisgesteuert und situationsbedingt initiieren kann.

Diese Aufgabe wird gelöst durch ein Verfahren zur initialen Vergabe und/oder Erneuerung von Zertifikaten für Geräte und/oder Applikationen in einem Leitsystem für eine technische Anlage auf Basis von Zertifikaten mit den Merkmalen des Anspruchs 1. Außerdem wird die Aufgabe gelöst durch einen Zertifizierungsservice für ein Leitsystem einer technischen Anlage gemäß Anspruch 6, durch ein Leitsystem für eine technische Anlage gemäß Anspruch 7 und durch dessen Verwendung in einer technischen Anlage gemäß Anspruch 8. Vorteilhafte Weiterbildungen ergeben sich aus den abhängigen Ansprüchen.

Bei einem Verfahren der eingangs beschriebenen Art wird die Aufgabe erfindungsgemäß dadurch gelöst, dass die Geräte und/oder Applikationen zusätzlich zu dem Zertifikatsmanagementprotokoll einen Zertifizierungsservice implementieren, der eine, insbesondere zustandslose, Alarmmeldung erzeugt und in dem Leitsystem bereitstellt, wenn ein zuvor von dem jeweiligen Gerät und/oder der jeweiligen Applikation gestellter Zertifikatsantrag nach Ablauf einer vorherbestimmten Zeitdauer nicht von der Zertifizierungsstelle beantwortet worden ist. Der Zertifizierungsservice erzeugt nach der Erzeugung und Bereitstellung der zustandslosen Alarmmeldung eine Erledigungsmeldung und stellt diese in dem Leitsystem bereit. Dies erfolgt jedoch erst, nachdem der zuvor von dem Gerät, der Applikation oder dem Registrierungsdienst gestellte Zertifikatsantrag von der Zertifizierungsstelle beantwortet worden ist, d.h. der Zertifikatsantrag entweder genehmigt oder abgelehnt worden ist. Durch die Erledigungsmeldung weiß jeder Teilnehmer des Leitsystems bzw. der technischen Anlage, dass sich die Alarmmeldung erledigt hat.

Unter einem Leitsystem wird im vorliegenden Kontext ein computergestütztes technisches System verstanden, das Funktionalitäten zum Darstellen, Bedienen und Leiten einer technischen Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Eine technische Anlage ist eine Mehrzahl an Maschinen, Geräten, Applikationen und dergleichen, die in einem funktionalen und oftmals auch räumlichen Zusammenhang zueinander stehen. Mittels der Anlage werden in (groß-)technischen Dimensionen Produkte, Komponenten und dergleichen erzeugt bzw. gefertigt.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats kann in der Regel mittels kryptografischer Verfahren verifiziert werden.

Das von den Geräten und/oder (Web-)Applikationen verwendete Zertifikatsmanagementprotokoll ist ein gängiges, im Kontext eines Zertifikatsmanagements für ein Leitsystem üblicherweise verwendetes Protokoll. Beispielsweise kann es sich um das Certificate Management Protokoll (CMP) handeln, das in der Spezifikationspublikation RFC4210/4211 (RFC = Request For Comments) der Internet Engineering Task Force (IETF) beschrieben wird.

Die Zertifizierungsstelle der technischen Anlage gibt die (digitalen) Zertifikate heraus (Bereitstellung/Zuweisung) und überprüft deren Gültigkeit (Integritätssicherung). Die Zertifizierungsstelle bildet den Kern einer Public-Key-Infrastruktur (PKI) der technischen Anlage. Sie wird auch als Certification Authority (CA) bezeichnet.

Erfindungsgemäß wird zusätzlich zu den zum Zwecke der Zertifikatsausstellung standardmäßig gemäß dem gewählten Zertifikatsmanagementprotokoll (beispielsweise dem CMP-Protokoll) ausgetauschten Nachrichten ein sogenannter Zertifizierungsservice bereitgestellt. Dieser Zertifizierungsservice ist dafür ausgelegt, einen möglichst zeitnahen Aufbau der für eine dringende Zertifikatsausstellung (Online-)Verbindung zwischen einem Gerät / einer Applikation und der Zertifizierungsstelle im Bedarfsfall zu ermöglichen.

Bleibt einen Zertifikatsantrag (Certificate Signing Request = CSR) eines Geräts oder einer Applikation an die Zertifizierungsstelle nach Ablauf einer vorherbestimmten Zeitdauer unbeantwortet (konfigurierbarer Timeout), so meldet der Zertifizierungsservice diesen Umstand dem Leitsystem mittels einer von ihm erzeugten und im Leitsystem hinterlegten Alarmmeldung.

Diese Alarmmeldung ist in vorteilhafter Weise zustandslos. Unter dem Begriff "zustandslose Alarmmeldung" wird vorliegend eine Alarmmeldung verstanden, deren Inhalt ausschließlich ein externer Zustand ist. Im vorliegenden Fall bedeutet dies, dass die zustandslose Alarmmeldung nur eine Information darüber beinhaltet, dass ein Zertifikatsantrag eines Gerätes bzw. einer Applikation nach Ablauf einer vorherbestimmten Zeitdauer nicht beantwortet worden ist. Die zustandslose Alarmmeldung weist keine sie selbst betreffende Zustandsinformation auf wie das beispielsweise bei Prozessalarmen üblicherweise der Fall ist (beispielsweise "Meldung gekommen", "Meldung quittiert" oder "Meldung gegangen").

Der Zertifizierungsservice wird erst dann aktiv, wenn angeforderte Zertifikatsanträge unbeantwortet bleiben und (manuelle oder automatische) Eingriffe zwecks eines Aufbaus der (Online-)Verbindung zu einer verfügbaren Zertifizierungsstelle notwendig sind. Bevorzugt weist die zustandslose Alarmmeldung eine Dringlichkeitsinformation auf, um der Alarmmeldung eine höhere Priorität zuzuweisen.

Falls es sich aus technischen (bzw. netzwerktechnischen) Gründen als unmöglich erweist, die (Online-) Verbindung aufzubauen, kann der Zertifizierungsantrag auch auf einem anderen Weg (z.B. manuell oder per E-Mail) an die Zertifizierungsstelle übermittelt werden. Wird das erforderliche Zertifikat von der Zertifizierungsstelle vor Ablauf der vorherbestimmten Zeitdauer ausgestellt, und an das Gerät / die Applikation zugestellt, so erzeugt der Zertifizierungsservice keine Alarmmeldung.

Der leitsystemspezifische Zertifizierungsservice ermöglicht - in erfinderischer Weiterbildung eines in dem Leitsystem implementierten standardmäßigen Zertifikatsmanagements - dass die Zertifikatsausstellung im Bedarfsfall ereignisgesteuert und situationsbedingt erfolgen kann. Die dafür benötigte Online-Verbindung zwischen einem Gerät und der Zertifizierungsstelle wird entweder voll automatisch oder semi-automatisch aufgebaut - beispielsweise angestoßen durch einen Bediener der technischen Anlage bzw. des Leitsystems, der die entsprechenden zustandslose Alarmmeldung des Zertifizierungsservice erhalten hat.

Durch die beschriebene Lösung wird das automatisierte Zertifikatsmanagement durch den Verzicht auf ein unnötiges Polling und eine mit hohen Kosten verbundene höchstmögliche Verfügbarkeit der technischen Anlage sowie eine dauerhafte Verbindung (online) zwischen den Geräten/Applikationen und der Zertifizierungsstelle zuverlässiger, intelligenter und flexibler gestaltet.

Die beschriebene Lösung ermöglicht zudem eine flexible Anbindung an herkömmliche CA-Produkte und unterstützt - aufgrund der Nutzung von Standardprotokollen für das Zertifikatsmanagement - alle gängigen Certificate Management Use Cases (insbesondere Bootstrapping, Update, Revocation, Hardware Exchange). Somit ist sie konform zu den PKI-relevanten Anforderungen der Norm IEC 62443 als des führenden internationalen Security-Standards für die technische Automatisierung.

Das erfindungsgemäße Verfahren kann zur Revokation eines aus diversen Gründen (beispielsweise aufgrund eines Gerätetauschs zur Laufzeit der Anlage) nicht mehr gültigen Zertifikats angewandt werden. Bevorzugt erfolgt die Stellung des Zertifikatsantrags aber im Rahmen einer Zertifikatserneuerung der Geräte und/oder Applikationen.

Zur Stellung des Zertifikatsantrags bei der wenigstens einen Zertifizierungsstelle der technischen Anlage kann wenigstens ein dazwischengeschalteter Registrierungsdienst (auch als Registrierungsstelle oder Registration Authority (RA) bezeichnet) verwendet werden. Der oder die dazwischengeschaltete Registrierungsdienste können lokale Registrierungsdienste sein, die mit einem übergeordneten globalen Registrierungsdienst kommunizieren, welcher wiederum direkt in Verbindung mit der wenigstens einen Zertifizierungsstelle der technischen Anlage steht. Dadurch lässt sich eine Störungsquelle feinmaschiger innerhalb einer Kette "Gerät/Applikation -> Registrierungsdienst -> Zertifizierungsstelle" lokalisieren und entsprechend berücksichtigen sowie zeitnah mit Hilfe des Zertifikatsservices beseitigen bzw. mit Hilfe anderer, adäquater Mechanismen umgehen.

Der Zertifizierungsservice kann auf dem oder den Registrierungsdiensten implementiert sein. Falls ein Gerät oder eine Applikation den oder die Registrierungsdienste nicht erreichen kann bzw. nach Ablauf der vorherbestimmten Zeitdauer keine Antwort von der Zertifizierungsstelle (über den dazwischengeschalteten Registrierungsdienst) erhalten hat, wird der auf dem Gerät oder der Applikation implementierte Zertifizierungsservice aufgerufen.

Falls jedoch keine (Online-)Verbindung zwischen dem Registrierungsdienst (lokal oder global) und der Zertifizierungsstelle aufgebaut werden kann, wird der Zertifizierungsservice in dem Registrierungsdienst (lokal oder global) benötigt.

Im Rahmen einer weiteren bevorzugten Weiterbildung der Erfindung werden die zustandslose Alarmmeldung und/oder die Erledigungsmeldung in einem Archiv hinterlegt. Bei dem Archiv kann es sich um ein zentrales Prozessdatenarchiv (Process Historian) handeln, das von den Teilnehmern des Leitsystems bzw. der technischen Anlage erreichbar ist. Dabei muss sich das Archiv nicht unbedingt physisch innerhalb der Anlage befinden, sondern kann auch in einer externen Serverumgebung realisiert sein. Operatoren, Wartungspersonal und sonstige Benutzer einer technischen Anlage können durch entsprechende Filterung des Archivs in Hinblick auf die zertifikatsbedingten zustandslosen Alarmmeldungen eine Historie dieser Alarmmeldungen verfolgen und prüfen, ob noch weitere Zertifikatsanträge offen, d.h. unbeantwortet sind, die gegebenenfalls zu Beeinträchtigungen der Anlage führen könnten.

Durch die Archivierung der Alarmmeldung und/oder der Erledigungsmeldung ist darüber hinaus ein nachgelagertes Audit des Zertifikatsmanagements möglich (ein sogenannter Audit Trail). Dabei kann insbesondere geprüft werden, ob zertifikatsbedingte Beeinträchtigungen der technischen Anlage aufgetreten sind.

Zudem kann eine verfahrenstypische Gerätewartung (beispielsweise eine Erkennung von Geräteausfällen oder eines Wartungsbedarfs) um eine Kategorie "Zertifikate" erweitert werden, da sämtliche Informationen betreffs des Zertifikatsmanagements unmittelbar zugänglich sind.

Bevorzugt kann der Registrierungsdienst auf das Archiv zugreifen und dort automatisch nach unbeantworteten Zertifikatsanträgen suchen und diese an die Zertifizierungsstelle weiterleiten. Es ist aber auch möglich, dass die Zertifizierungsstelle einen direkten, unmittelbaren Zugriff auf das Archiv mit den dort hinterlegten Alarm- und/oder Erledigungsmeldungen hat.

Die Aufgabe wird zudem gelöst durch einen Zertifizierungsservice für ein Leitsystem einer technischen Anlage, der von Geräten und/oder Applikationen und/oder Registrierungsdiensten der technischen Anlage verwendbar ist und dazu ausgebildet und vorgesehen ist, eine zustandslose Alarmmeldung zu erzeugen und in dem Leitsystem bereitzustellen, wenn ein zuvor von einem Gerät, einer Applikation oder einem Registrierungsdienst gestellter Zertifikatsantrag innerhalb einer vorherbestimmten Zeitdauer nicht von einer Zertifizierungsstelle des Leitsystems beantwortet wurde.

Der Zertifizierungsservice ist vorteilhafterweise zusätzlich dazu ausgebildet und vorgesehen, nach der Erzeugung und Bereitstellung der zustandslosen Alarmmeldung eine Erledigungsmeldung zu erzeugen und in dem Leitsystem bereitzustellen. Bedingung hierfür ist, dass der zuvor von dem Gerät, der Applikation oder dem Registrierungsdienst gestellte Zertifikatsantrag von der Zertifizierungsstelle des Leitsystems beantwortet wurde.

Die Aufgabe wird zudem gelöst durch ein Leitsystem für eine technische Anlage, das Mittel zur Ausführung des erfindungsgemäßen Verfahrens und/oder Mittel zur Implementierung des erfindungsgemäßen Zertifizierungsservice umfasst.

Bevorzugt wird dieses Leitsystem zum Betrieb einer technischen Anlage verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird.

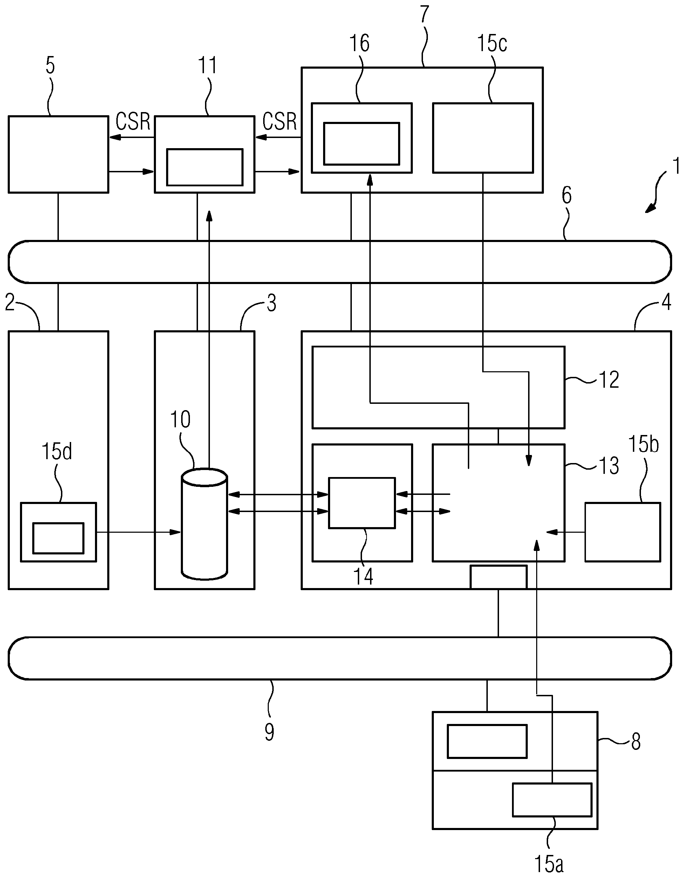

In der Figur ist ein erfindungsgemäßes Leitsystem 1 einer als verfahrenstechnischen Anlage ausgebildeten technischen Anlage dargestellt. Das Leitsystem 1 umfasst eine Engineering-Komponente bzw. eine Engineering Station 2, ein Prozessdatenarchiv bzw. einen Process Historian 3, einen Server eines Bediensystems bzw. einen Operator System Server 4, einen Registrierungsdienst 11 und eine Zertifizierungsstelle bzw. eine Certification Authority 5. Die Engineering Station 2, das Prozessdatenarchiv 3, der Operator System Server 4, der Registrierungsdienst 11 und die Zertifizierungsstelle 5 stehen über einen Terminalbus 6 miteinander in Verbindung. Ein Benutzer bzw. Client 7 steht mittels des Terminalbusses 6 mit den zuvor genannten vier Komponenten in Verbindung. Der Terminalbus 6 kann, ohne sich darauf zu beschränken, beispielsweise als Industrial Ethernet ausgebildet sein.

An den Operator System Server 4 ist ein Gerät 8 mittels eines Anlagenbusses 9 angeschlossen. Bei dem angeschlossenen Gerät 8 kann es sich dabei alternativ auch um eine Applikation, insbesondere Webapplikation, handeln. Im Rahmen der Erfindung kann eine beliebige Zahl an Geräten und/oder Applikationen an den Operator System Server 4 angeschlossen sein. Der Anlagenbus 9 kann, ohne sich darauf zu beschränken, beispielsweise als Industrial Ethernet ausgebildet sein. Das Gerät 8 kann wiederum mit einer beliebigen Anzahl an Subsystemen (nicht dargestellt) verbunden sein.

In dem Prozessdatenarchiv 3 ist ein zentrales Archiv 10 integriert, in welchem unter anderem Zertifikate und Meldungen hinterlegt und wieder abgerufen werden können.

In dem Operator System Server 4 ist ein Visualisierungsdienst 12 integriert, über den eine Übertragung von Authentifizierungsdaten bzw. Zertifikaten an den Client 7 erfolgen kann. Zudem weist der Operator System Server 4 ein Prozessabbild (Process Image) 13 und eine Speicherverwaltung (Storage Framework) 14 auf.

Alle in der technischen Anlage integrierten Geräte 8 bzw. Applikationen müssen sich bei einer Inbetriebnahme der technischen Anlage gegenüber dem Registrierungsdienst 11 authentifizieren, um als vertrauenswürdige Kommunikationsteilnehmer registriert zu sein. Hierzu senden die Geräte/Applikationen 8 eine Anforderung zur Erstellung eines Zertifikats, einen sogenannten Certificate Signing Request (CSR). Die Anforderung der Geräte bzw. Applikationen 8 wird von dem Registrierungsdienst 11 geprüft. Im Fall einer erfolgreichen Prüfung wird die Anforderung mit einer Signatur des Registrierungsdienstes 11 versehen und anschließend an die Zertifizierungsstelle 5 weitergebeben, die ihn ebenfalls prüft.

Im Fall einer erfolgreichen Prüfung bezieht der Registrierungsdienst 11 stellvertretend für jedes Gerät bzw. jede Applikation 8 das entsprechende Zertifikat. Die Prüfung durch den Registrierungsdienst 11 zielt insbesondere darauf, zu kontrollieren, ob das Gerät bzw. die Applikation 8 im Kontext der technischen Anlage als vertrauenswürdige Kommunikationspartner gelten, d.h. insbesondere in dem Prozessdatenarchiv 4 als solche hinterlegt sind.

Außerdem wird anhand bestimmter Kriterien geprüft, ob der Certificate Signing Request (CSR) korrekt ist. Die Zertifizierungsstelle 5 prüft, ob die weitergeleiteten Anträge durch einen vertrauenswürdigen Registrierungsdienst 11 signiert sind und (anhand der bestimmten Kriterien), ob der Certificate Signing Request im Kontext der Zertifizierungsstelle 5 korrekt ist. Im Fall einer erfolgreichen Prüfung erhält der Registrierungsdienst 11 stellvertretend für jedes Gerät bzw. jede Applikation 8 das entsprechende Zertifikat.

Die Verwaltung der Zertifikate erfolgt dabei unter Verwendung eines gängigen Zertifikatsmanagementprotokolls, beispielsweise des Certificate Management Protokolls (CMP).

Im Rahmen der vorliegenden Erfindung implementieren das Gerät 8 zusätzlich einen ersten Zertifizierungsservice 15a, das Prozessabbild 13 des Operator System Servers 4 einen zweiten Zertifizierungsservice 15b, ein Benutzer bzw. Client 7 einen dritten Zertifizierungsservice 15c und die Engineering Station 2 einen vierten Zertifizierungsservice 15d. Die Zertifizierungsservices 15a, 15b, 15c, 15d erzeugen jeweils eine zustandslose Alarmmeldung, wenn ein zuvor gestellter Zertifikatsantrag nach Ablauf einer vorherbestimmten Zeitdauer nicht von der Zertifizierungsstelle 5 beantwortet worden ist. Diese Alarmmeldungen sind von den anderen Teilnehmern des Leitsystems 1 abrufbar bzw. auslesbar.

Nachdem der zuvor gestellte Zertifikatsantrag von der Zertifizierungsstelle 5 beantwortet worden ist, erzeugt der Zertifizierungsservice eine Erledigungsmeldung und stellt diese den anderen Teilnehmern in dem Leitsystem 1 bereit.

Die Alarmmeldungen setzen sich aus den folgenden Inhalten zusammen:
- ein Ablaufdatum, an dem das betreffende, zu erneuernde Zertifikat ausläuft und ersetzt werden muss,
- ein Anfragedatum, an welchem der Zertifikatsantrag initiiert wurde,
- eine Dringlichkeitsinformation aufweist, um der Alarmmeldung eine höhere Priorität zuzuweisen. Werden beispielsweise benötigte operative Zertifikate oder in den Geräten hinterlegte Gerätezertifikate nicht innerhalb eines vorgegebenen Zeitraums erneuert, so kann der Zertifizierungsservice die Bearbeitungspriorität des Zertifikatsantrags erhöhen ("Eskalation"),
- eine Gerätekennung (Seriennummer oder andere eindeutige Identifikation),
- ein Gerätepfad zur einfachen Lokalisierung des betreffenden Geräts.

Die zustandslose Alarmmeldungen und die Erledigungsmeldungen werden von den Zertifizierungsservices 15a, 15b, 15c, 15d in dem zentralen Archiv 10 hinterlegt. Über ein Anzeigeelement 16, das in dem Client 7 integriert ist, kann ein Status der Alarmmeldungen bzw. Erledigungsmeldungen abgefragt und dargestellt werden, um beispielsweise ein Audit Trail durchzuführen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Dieser ist durch die Ansprüche definiert.

## Patentansprüche

1. Verfahren zur initialen Vergabe und/oder Erneuerung von Zertifikaten für Geräte und/oder Applikationen (8) in einem Leitsystem (1) für eine technische Anlage auf Basis von Zertifikaten, wobei die Geräte und/oder Applikationen (8) in einem Rahmen der initialen Vergabe und/oder Erneuerung der Zertifikate ein Zertifikatsmanagementprotokoll zur Stellung eines Zertifikatsantrags bei wenigstens einer Zertifizierungsstelle (5) der technischen Anlage verwenden,
**dadurch gekennzeichnet, dass**
die Geräte und/oder Applikationen (8) zusätzlich zu dem Zertifikatsmanagementprotokoll einen Zertifizierungsservice (15a, 15b, 15c, 15d) implementieren, der eine zustandslose Alarmmeldung erzeugt und in dem Leitsystem (1) bereitstellt, wenn ein zuvor von dem Gerät und/oder der Applikation (8) gestellter Zertifikatsantrag nach Ablauf einer vorherbestimmten Zeitdauer nicht von der Zertifizierungsstelle (5) beantwortet worden ist,
wobei der Zertifizierungsservice (15a, 15b, 15c, 15d) nach der Erzeugung und Bereitstellung der zustandslosen Alarmmeldung eine Erledigungsmeldung erzeugt und in dem Leitsystem (1) bereitstellt, nachdem der zuvor von dem Gerät und/oder der Applikation (8) gestellte Zertifikatsantrag von der Zertifizierungsstelle (5) beantwortet worden ist.

2. Verfahren nach Anspruch 1, bei dem zur Stellung des Zertifikatsantrags bei der wenigstens einen Zertifizierungsstelle (5) der technischen Anlage wenigstens ein dazwischengeschalteter Registrierungsdienst (11) verwendet wird, der vorzugsweise den Zertifizierungsservice (15a, 15b, 15c, 15d) gemäß Anspruch 1 implementiert.

3. Verfahren nach einem der vorangegangenen Ansprüche, bei dem die zustandslose Alarmmeldung eine Dringlichkeitsinformation aufweist, um der Alarmmeldung eine höhere Priorität zuzuweisen.

4. Verfahren nach einem der vorangegangenen Ansprüche, bei dem die zustandslose Alarmmeldung und/oder die Erledigungsmeldung in einem Archiv (10) hinterlegt werden.

5. Verfahren nach einem der vorangegangenen Ansprüche, bei dem die Stellung des Zertifikatsantrags im Rahmen einer Zertifikatserneuerung der Geräte und/oder Applikationen (8) erfolgt.

6. Zertifizierungsservice (15a, 15b, 15c, 15d) für ein Leitsystem (1) einer technischen Anlage, der von Geräten und/oder Applikationen (8) der technischen Anlage verwendbar ist, und dazu ausgebildet und vorgesehen ist, eine zustandslose Alarmmeldung zu erzeugen und in dem Leitsystem (1) bereitzustellen, wenn ein zuvor von einem Gerät und/oder einer Applikation gestellter Zertifikatsantrag innerhalb einer vorherbestimmten Zeitdauer nicht von einer Zertifizierungsstelle (5) des Leitsystems (1) beantwortet worden ist,
wobei der Zertifizierungsservice (15a, 15b, 15c, 15d) zusätzlich dazu ausgebildet und vorgesehen ist, nach der Erzeugung und Bereitstellung der zustandslosen Alarmmeldung eine Erledigungsmeldung zu erzeugen und in dem Leitsystem (1) bereitzustellen, für den Fall, dass der zuvor von dem Gerät und/oder der Applikation gestellte Zertifikatsantrag von der Zertifizierungsstelle (5) des Leitsystems (1) beantwortet worden ist.

7. Leitsystem (1) für eine technische Anlage, umfassend Mittel zur Ausführung eines Verfahrens gemäß einem der Ansprüche 1 bis 5 und/oder Mittel zur Implementierung eines Zertifizierungsservice (15a, 15b, 15c, 15d) gemäß Anspruch 6.

8. Verwendung eines Leitsystems (1) gemäß Anspruch 7 zum Betrieb einer technischen Anlage.

## Claims

1. Method for the initial allocation and/or renewal of certificates for devices and/or applications (8) in a control system (1) for a technical installation on the basis of certificates, wherein the devices and/or applications (8), within a framework of the initial allocation and/or renewal of the certificates, use a certificate management protocol to post a certificate request at at least one certification authority (5) of the technical installation,
**characterised in that**
the devices and/or applications (8), in addition to the certificate management protocol, implement a certification service (15a, 15b, 15c, 15d) which generates a stateless alarm message and provides it in the control system (1), when a certificate request previously posted by the device and/or the application (8) has not been answered by the certification authority (5) after a previously determined period of time has expired,
wherein the certification service (15a, 15b, 15c, 15d) generates a resolution message after the generation and provision of the stateless alarm message and provides this in the control system (1), once the certificate request previously posted by the device and/or the application (8) has been answered by the certification authority (5).

2. Method according to claim 1, in which, in order to post the certificate request at the at least one certification authority (5) of the technical installation, at least one intermediary registration service (11) is used, which preferably implements the certification service (15a, 15b, 15c, 15d) according to claim 1.

3. Method according to one of the preceding claims, in which the stateless alarm message has an item of urgency information, in order to assign the alarm message a higher priority.

4. Method according to one of the preceding claims, in which the stateless alarm message and/or the resolution message are stored in an archive (10).

5. Method according to one of the preceding claims, in which the posting of the certificate request takes place in the framework of a certificate renewal of the devices and/or applications (8).

6. Certification service (15a, 15b, 15c, 15d) for a control system (1) of a technical installation, which is able to be used by devices and/or applications (8) of the technical installation and is embodied and provided to generate a stateless alarm message and to provide it in the control system (1) when a certificate request previously posted by a device and/or an application has not been answered by a certification authority (5) of the control system (1) within a previously determined period of time,
wherein the certification service (15a, 15b, 15c, 15d) in addition is embodied and provided to generate a resolution message after the generation and provision of the stateless alarm message and provides this in the control system (1), in the event that the certificate request previously posted by the device and/or the application has been answered by the certification authority (5) of the control system (1).

7. Control system (1) for a technical installation, comprising means for carrying out a method according to one of claims 1 to 5 and/or means for implementing a certification service (15a, 15b, 15c, 15d) according to claim 6.

8. Use of a control system (1) according to claim 7 for operating a technical installation.

## Revendications

1. Procédé d'attribution initiale et/ou de renouvellement de certificats d'appareils et/ou d'applications (8) dans un système (1) de conduite d'une installation technique sur la base de certificats, dans lequel les appareils et/ou les applications (8) utilisent, dans le cadre de l'attribution initiale et/ou du renouvellement des certificats, un protocole de gestion de certificats pour former une demande de certificat auprès d'au moins un poste (5) de certification de l'installation technique,
**caractérisé en ce que**
les appareils et/ou les applications (8) mettent en oeuvre, supplémentairement au protocole de gestion de certificats, un service (15a, 15b, 15c, 15d) de certification, qui produit un message d'alerte sans statut et le met à disposition dans le système (1) de conduite, s'il n'a pas été répondu par le poste (5) de certification, après l'expiration d'une durée déterminée à l'avance, à une demande de certificat formée auparavant par l'appareil et/ou l'application (8),
dans lequel le service (15a, 15b, 15c, 15d) de certification produit, après la production et la mise à disposition du message d'alerte sans statut, un message d'exécution et le met à disposition dans le système (1) de conduite, après qu'il a été répondu par le poste (5) de certification à la demande de certificat formée auparavant par l'appareil et/ou l'application (8) .

2. Procédé suivant la revendication 1, dans lequel pour former la demande de certificat auprès du au moins un poste (5) de certification de l'installation technique, on utilise au moins un service (11) d'enregistrement intermédiaire, qui met en oeuvre de préférence le service (15a, 15b, 15c, 15d) de certification suivant la revendication 1.

3. Procédé suivant l'une des revendications précédentes, dans lequel le message d'alerte sans statut comporte une information d'urgence, pour attribuer une priorité plus grande au message d'alerte.

4. Procédé suivant l'une des revendications précédentes, dans lequel on met dans une archive (10) le message d'alerte sans statut et/ou le message d'exécution.

5. Procédé suivant l'une des revendications précédentes, dans lequel la formation de la demande de certificat s'effectue dans le cadre d'un renouvellement de certificat des appareils et/ou des applications (8).

6. Service (15a, 15b, 15c, 15d) de certification pour un système (1) de conduite d'une installation technique, qui peut être utilisée par des appareils et/ou des applications (8) de l'installation technique et qui est constitué et prévu pour produire un message d'alerte sans statut et le mettre à disposition dans le système (1) de gestion, s'il n'a pas été répondu par le poste (5) de certification du système (1) de conduite, après l'expiration d'une durée déterminée à l'avance, à une demande de certificat formée auparavant par l'appareil et/ou l'application, dans lequel le service (15a, 15b, 15c, 15d) de certification est constitué et prévu en outre pour, après la production et la mise à disposition du message d'alerte sans statut, produire un message d'exécution et le mettre à disposition dans le système (1) de conduite, dans le cas où il a été répondu par le poste (5) de certification du système (1) de conduite à la demande de certificat formée auparavant par l'appareil et/ou l'application.

7. Système (1) de conduite d'une installation technique comprenant des moyens d'exécution d'un procédé suivant l'une des revendications 1 à 5 et/ou des moyens de mise en oeuvre d'un service (15a, 15b, 15c, 15d) de certification suivant la revendication 6.

8. Utilisation d'un système (1) de conduite suivant la revendication 7 pour faire fonctionner une installation technique.
